(19) **Europäisches Patentamt / European Patent Office / Office européen des brevets**

(11) **EP 4 388 504 B1**

(12) **EUROPEAN PATENT SPECIFICATION**

(45) Date of publication and mention of the grant of the patent:
**04.12.2024 Bulletin 2024/49**

(21) Application number: **22823636.0**

(22) Date of filing: **12.12.2022**

(51) International Patent Classification (IPC):
**G06V 10/32** $^{(2022.01)}$    **G06V 10/46** $^{(2022.01)}$
**G06V 10/80** $^{(2022.01)}$    **G06V 20/52** $^{(2022.01)}$

(52) Cooperative Patent Classification (CPC):
**G06V 20/52; G06V 10/32; G06V 10/462; G06V 10/806**

(86) International application number:
**PCT/IB2022/062079**

(87) International publication number:
**WO 2023/111819 (22.06.2023 Gazette 2023/25)**

(54) **SALIENCY-BASED AUTOMATIC TARGET DETECTION SYSTEM**

**AUF SALIENZ BASIERENDES AUTOMATISCHES ZIELERKENNUNGSSYSTEM**

**SYSTÈME DE DÉTECTION DE CIBLE AUTOMATIQUE À BASE DE RELIEF**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **15.12.2021 EP 21425068**
**27.04.2022 IT 202200008324**

(43) Date of publication of application:
**26.06.2024 Bulletin 2024/26**

(73) Proprietor: **Leonardo S.p.a.**
**00195 Roma (IT)**

(72) Inventors:
- **NATALI, Federico**
  **00195 ROMA (IT)**
- **DE STEFANI, Filippo**
  **00195 ROMA (IT)**
- **ACITO, Nicola**
  **43100 PARMA (IT)**
- **CORSINI, Giovanni**
  **43100 PARMA (IT)**
- **DIANI, Marco**
  **43100 PARMA (IT)**

(74) Representative: **Studio Torta S.p.A.**
**Via Viotti, 9**
**10121 Torino (IT)**

(56) References cited:
- **PANDEY ACHALA ET AL: "A novel approach to multi-scale blending based on saliency mapping for multimedia image compositing applications", COMPUTERS AND GRAPHICS,, vol. 59, 23 June 2016 (2016-06-23), ELSEVIER, GB, pages 93 - 106, XP029691171, ISSN: 0097-8493, DOI: 10.1016/J.CAG.2016.06.003**
- **NAWAZ MEHMOOD ET AL: "Saliency detection via multiple-morphological and superpixel based fast fuzzy C-mean clustering network", EXPERT SYSTEMS WITH APPLICATIONS, vol. 161, 26 June 2020 (2020-06-26), ELSEVIER, AMSTERDAM, NL, XP086268069, ISSN: 0957-4174, [retrieved on 20200626], DOI: 10.1016/J.ESWA.2020.113654**
- **XIAODI HOU ET AL: "Saliency Detection: A Spectral Residual Approach", CVPR '07. IEEE CONFERENCE ON COMPUTER VISION AND PATTERN RECOGNITION, 1 June 2007 (2007-06-01), IEEE, PISCATAWAY, NJ, USA, pages 1 - 8, XP031114524, ISBN: 978-1-4244-1179-5**
- **ZOYA BYLINSKII ET AL: "What do different evaluation metrics tell us about saliency models?", ARXIV.ORG, CORNELL UNIVERSITY LIBRARY, 201 OLIN LIBRARY CORNELL UNIVERSITY ITHACA, NY 14853, 13 April 2016 (2016-04-13), XP080695097**

- **TONGWEI REN ET AL: "How Important is Location in Saliency Detection", INTERNET MULTIMEDIA COMPUTING AND SERVICE, ACM, 10 July 2014 (2014-07-10), USA, pages 10 - 13, XP058054837, ISBN: 978-1-4503-2810-4, DOI: 10.1145/2632856.2632945**
- **SOPHIE MARAT ET AL: "Modelling Spatio-Temporal Saliency to Predict Gaze Direction for Short Videos", ARXIV.ORG, vol. 82, no. 3, 12 February 2009 (2009-02-12), 201 Olin Library Cornell University Ithaca, NY 14853, pages 231 - 243, XP055550630, DOI: 10.1007/s11263-009-0215-3**

## Description

### Technical field of the invention

The present invention relates to a saliency-based automatic target detection, and more generally to a system to facilitate the detection of a potential object of interest in an image. In particular, the present invention finds advantageous, but not exclusive application, in a surveillance system that acquires video or infrared images of a monitored area and displays them on a screen so that an operator can search for potential objects of interest, for example potential targets, on the images displayed, which the following description will explicitly refer to without losing in general.

### Background

A high level of effort and attention is required of the operator in charge of monitoring a certain area when he has to continuously watch video images to look for potential objects of interest, such as targets or threats, which can then be further investigated to make important decisions. This is particularly true if the surveillance system uses a panoramic scanning system to reconstruct a 360° view around the monitored area.

Optoelectronic path surveillance systems are known to highlight potential objects of interest in the images based on some macroscopic characteristics of the objects, for example the colour, shape, size and/or movement of the objects. However, for particular scenarios it is necessary to be able to identify potential objects of interest without making assumptions about the size, shape, colour and/or movements of the object of interest.

Paper titled "A novel approach to multi-scale blending based on saliency mapping for multimedia image composition applications", by Achal Pandey et. al., Computers and Graphics, vol. 59, 23 June 2016, pages 93-106, Elsevier, discloses a multi-scale seamless image compositing method to minimize the artifacts along the boundaries of multiple images composited with different textures and colours in order to generate visually appealing and natural looking composites. The method automatically detects the visually salient objects from the source image for merging it over a destination image background. The method comprises the use of a salient object detection method for automatic mask generation and the formulation of a 2-D exponentially weighted Savitzky-Golay (2-D EWS-G) filter, which is an extension of 2-D S-G filter, for multi-scale pyramid based blending with edge preserving blurring property.

### Object and Summary of the Invention

Aim of the present invention is to provide a detection system that is able to detect potential objects of interest in an image of a monitored area, without having to make assumptions about characteristics of the object, such as size, shape, colour and/or movements, and that, at the same time, is easy and economical to realize.

In accordance with the present invention, there are provided a detection system to facilitate the detection of a potential object of interest in an original image and a surveillance system, as defined in the appended claims.

### Brief Description of the Drawings

Figure 1 shows a simplified block diagram of a surveillance system comprising the detection system of a potential object of interest in an image, realized according to the present invention.
Figure 2 shows the architecture of an hardware and software implementation of the detection system of Figure 1.
Figure 3 shows a block diagram of a processing module of the architecture of Figure 2.
Figure 4 schematically shows some processing steps of the architecture of Figure 2.
Figure 5 schematically shows further processing steps of the architecture of Figure 2.

### Detailed Description of Preferred Embodiments of the Invention

The following description is provided to enable a person skilled in the art to realize and use the invention. Various modifications to the embodiments will be readily apparent to those skilled in the art, without departing from the scope of protection of the claimed invention. Therefore, the present invention is not intended to be limited to the embodiments shown, but must be accorded the widest scope of protection consistent with the principles and features described and claimed in the appended claims.

Unless otherwise defined, all technical and scientific terms used in the present disclosure have the same meaning commonly understood by a person with ordinary skill in the art to which the disclosed embodiments belong. In case of conflict, the present invention, including the definitions, will be binding. Furthermore, the examples are illustrative only and are intended to be non-limiting.

In order to promote understanding of the disclosed embodiments, reference will be made to some embodiments and specific language will be used to describe the same. The terminology used in the present disclosure is therefore for the sole purpose of describing particular embodiments, and is not intended to limit the scope of the present disclosure.

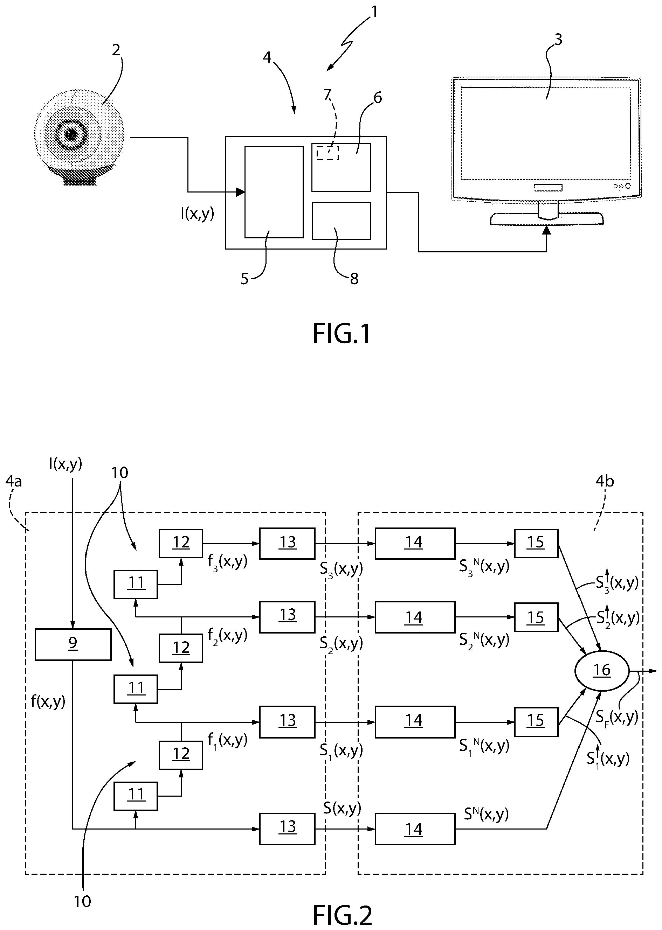

In Figure 1, 1 generally denotes, as a whole, a surveillance system to detect potential objects of interest, for example target objects or threatening objects, in a certain area to be monitored.

The surveillance system 1 comprises at least one optoelectronic device 2 for acquiring at least one image, and in particular static images or video image frames, of the area to be monitored, a display device 3 for displaying images, for example a normal digital screen, and a detection system 4, which is connected to the optoelectronic device 2 to receive the image, is adapted to perform a complex processing of this image and is connected to the display device 3 to display the result of this complex processing in order to facilitate the task of an operator in identifying a potential object of interest present in the image. The received image is hereinafter called the original image and is denoted with I(x,y) to underline the representation of the "given image" in the domain of the spatial coordinates x and y in the plane defined by the image.

The original image I(x,y) is either a video image or an infrared image. It is noted that an infrared image is not part of the claimed embodiment of the invention. The video image is encoded using YUV standard. The original image I(x,y) is the luminance component of a video image encoded using the YUV standard.

The detection device 4 comprises a programmable logic device 5, which receives the original image I(x,y), at least one processor 6, which is provided with a RAM memory 7 and is interfaced with the programmable logic device 5, and at least one non-volatile memory 8, which is adapted to store software that can be loaded into the RAM memory 7 to be executed by the processor 6.

Advantageously, the programmable logic device 5 is a FPGA (Field Programmable Gate Array). Advantageously, the processor 6 is of the ARM type. Advantageously, the programmable logic device 5 and the processor 6 are part of a single heterogeneous integrated computer device, of the type known as System on Chip (SoC).

Figure 2 shows the architecture of a hardware and software implementation of the detection system 4. The hardware part of the detection system is denoted by 4a and is implemented via the programmable logic device 5 and the software part of the detection system 4 is denoted by 4b and is implemented via the processor 6 and the memory 8. In other words, the software stored in the memory 8 and executed on the processor 6 comprises the software part 4b.

The programmable logic device 5 is programmed to implement an image conditioning module 9 that performs a padding of the original image I(x,y) in order to neutralize errors near the edge of that image due to discontinuity of the image.

According to an embodiment not shown, in which the errors near the edge of the image I(x,y) have an acceptable extent, the programmable logic device 5 is devoid of the image conditioning module 9.

In other words, the image conditioning module 9 is optional and has no conceptual impact on downstream processings. Therefore, for simplicity's sake, hereinbelow the original image will be understood indifferently the image I(x,y) or the image at the output of the image conditioning module 9, denoted by f(x,y).

The programmable logic device 5 is programmed to implement a plurality of image processing stages 10 which are connected in cascade between them. Each image processing stage 10 comprises a respective low-pass filter 11 and a respective subsampling module 12 connected to the output of the low-pass filter 11. The low-pass filter 11 of the image processing stage 10 further upstream receives the original image f(x,y) and the subsampling modules 12 provide respective processed images $f_i(x,y)$. Each processed image $f_i(x,y)$, except the last one, is supplied to the next image processing stage 10. The example of Figure 2 comprises three image processing stages 10 for generating three processed images, i.e. $f_i(x,y)$ with i = {1,2,3}.

The low-pass filter 11 blurs the image at the input. The subsampling module 12 reduces the resolution of the blurred image at the input. In particular, the subsampling module 12 performs a subsampling of factor 2 along each spatial coordinate. Thus, each image processing stage 10 provides a processed image $f_i(x,y)$ having a greater blur and a resolution fourfold lower than the image at the input. The cascade of the image processing stages 10 realizes a so-called pyramid representation of the original image f(x,y). The first level of the pyramid representation is the original image f(x,y) and each subsequent level is a processed image $f_i(x,y)$ obtained by blurring and subsampling the previous level so as to obtain a stack of images with progressively increasing blurring and progressively decreasing resolution.

The programmable logic device 5 is further programmed to implement a number of saliency map extraction modules 13 equal to the number of image processing stages 10 plus one to provide respective saliency maps, denoted by S(x,y) and $S_i(x,y)$. An image saliency map highlights those portions of the image that deviate from what surrounds them or from the background, regardless of the colour, contrast, and movement of those portions. Each saliency map S(x,y), $S_i(x,y)$ is relative to a respective image of a group of images that includes the original image f(x,y) and the processed images $f_i(x,y)$. The example of Figure 2 therefore comprises four saliency map extraction modules 13 for generating four saliency maps, i.e. i = {1,2,3}.

Advantageously, each saliency map extraction module 13 obtains the respective saliency map S(x,y), Si(x,y) based on a calculation of the spectral residual of a respective image of the aforementioned group of images. For this reason the saliency map extraction module 13 is also called the spectral residue saliency extraction module ("SRSE").

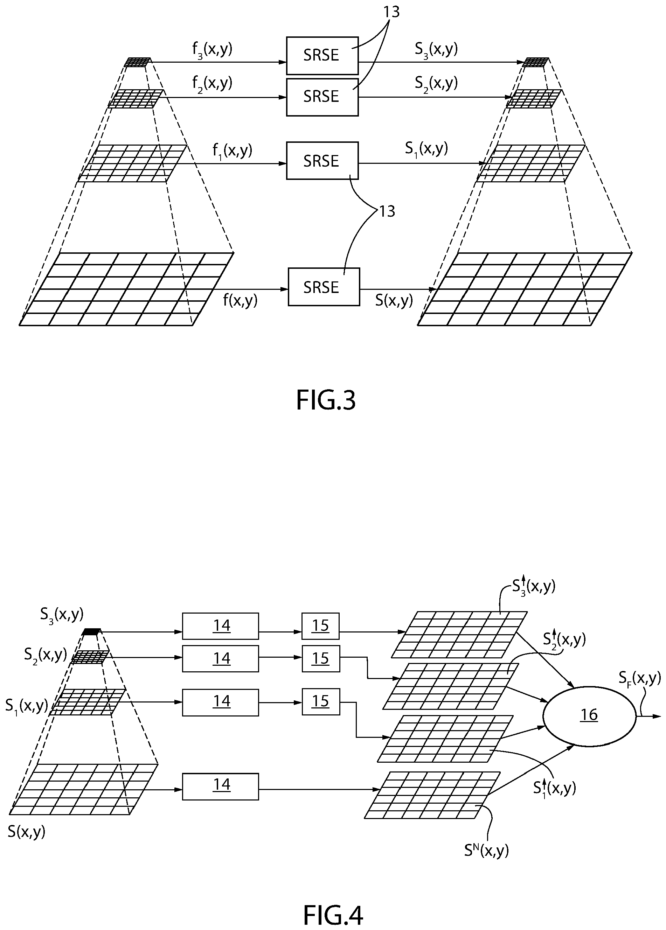

The saliency map extraction modules 13 transform the pyramid representation of the original image f(x,y) into a corresponding pyramid representation of saliency maps, as graphically shown in Figure 3. In this way, each saliency map $S_i(x,y)$ corresponding to a processed image $f_i(x,y)$ allows to highlight small portions with respect to the resolution of that map but which are larger in the original image f(x,y).

The software part 4b of the detection system 4, when loaded into the RAM memory 7 and executed by the processor 6, causes the latter to be configured to perform the processing steps described below with reference to Figure 2.

Firstly, a normalization of each of the saliency maps S(x,y) and $S_i(x,y)$ is performed as a function of the respective standard deviations, thereby obtaining corresponding normalized saliency maps $S^N(x,y)$ and $S_i^N(x,y)$ (steps 14 in Figure 2). In the example of Figure 2 the normalized saliency maps are four, i.e. i = {1,2,3 }.

Subsequently, the normalized saliency maps $S_i^N(x,y)$, i.e. those relative to the processed images $f_i(x,y)$, are resized so as to bring them to the size of the saliency map $S^N(x,y)$ of the original image f(x,y) (steps 15). In particular, the step of resizing the normalized saliency maps $S_i^N(x,y)$ provides for an interpolation between adjacent pixels. The normalized and resized saliency maps are denoted by $S_i^\uparrow(x,y)$. In the example of Figure 2 the normalized and resized saliency maps are four, i.e. i = {1,2,3}.

Finally, the normalized saliency map $S^N(x,y)$ and the normalized and resized saliency maps of the images $S_i^\uparrow(x,y)$ are merged to obtain a final saliency map $S_F(x,y)$ on which to detect the potential object of interest (step 16).

Figure 4 graphically shows the effect of resizing the normalized saliency maps $S_i^N(x,y)$ necessary to be able to perform the subsequent merging of all saliency maps.

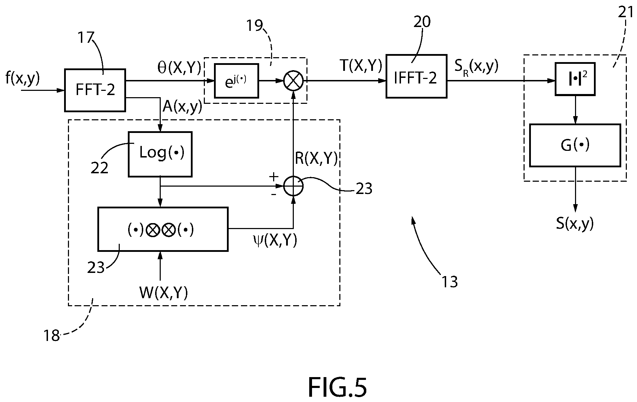

Each saliency map extraction module 13 comprises a plurality of calculation modules described in detail hereinbelow and shown in Figure 5, with particular reference to the original image f(x,y) and to the corresponding saliency map S(x,y) for ease of treatment.

A first calculation module 17 is configured to receive the image f(x,y) and apply to said image f(x,y) a two-dimensional fast Fourier transform (FFT-2) to provide the spectrum of the image in the domain of the spatial frequencies X and Y corresponding to the spatial coordinates x and y:

$$F(X,Y) = A(X,Y)e^{j\theta(X,Y)},$$

wherein A(X,Y) is the modulus and θ(X,Y) and the phase (argument) of the spectrum represented in exponential form.

A second calculation module 18 is configured to receive the modulus A(X,Y) and calculate, based on the latter, a respective spectral residual R(X,Y).

A third calculation module 19 is configured to combine the spectral residual R(X,Y) with the spectral phase, using the spectral residual R(X,Y) and the phase θ(X,Y) as the module and argument of a complex number in exponential form, and thus obtain the following signal in the domain of the spatial frequencies:

$$T(X,Y) = R(X,Y)e^{j\theta(X,Y)}.$$

A fourth calculation module 20 is configured to apply a two-dimensional inverse fast Fourier transform (IFFT-2) to the signal T(X,Y) so as to return to the domain of the spatial coordinates and provide a raw saliency map $S_R(x,y)$.

A fifth calculation module 21 is configured to apply a two-dimensional Gaussian filter to the squared modulus of the raw saliency map $S_R(x,y)$ and thus obtain the saliency map S(x,y) relative to the image f(x,y). In formulas, the saliency map is given by:

$$S(x,y) = G(|S_G(x,y)|^2),$$

wherein G is a Gaussian function defined by:

$$G(x,y) = e^{-\frac{x+y}{2\sigma^2}},$$

wherein $\sigma$ is the standard deviation of the Gaussian function. The Gaussian function G is used as a filter to clean the undulation superimposed on the raw saliency map $S_R(x,y)$.

In more detail, the calculation module 18 comprises a first calculation sub-module 22 configured to calculate the logarithm of the modulus A(X,Y) of the spectrum, a second calculation sub-module 23 configured to filter the logarithm of the modulus A(X,Y) by a moving average whose result is denoted by Ψ(X,Y) and a third calculation sub-module 24 configured to calculate the spectral residual R(X,Y) as the difference between the logarithm of the modulus A(X,Y) and the result of the moving average Ψ(X,Y).

In particular, the calculation sub-module 23 implements the moving average by calculating a two-dimensional convolution between the logarithm of the modulus A(X,Y) and a rectangular two-dimensional windowing function W(X,Y) according to the following formula:

$$\Psi(X,Y) = \log A(X,Y) \otimes \otimes W(X,Y).$$

The windowing function W(X,Y) is defined by the following formula:

$$W(X,Y) = \frac{1}{(2d+1)^2} \cdot rect\left(\frac{X}{2d+1}\right) \cdot rect\left(\frac{Y}{2d+1}\right),$$

wherein *rect* is the rectangular pulse function and the parameter *d* defines the width of the rectangular pulse.

Thus, the operation of each saliency map extraction module 13 is adjustable via the two parameters *d* and *σ*. Preferably, *d* is equal to 3 and *σ* is equal to 1.

The step of normalizing the saliency maps S(x,y) and Si(x,y) comprises a sequence of calculation steps performed for each of the saliency maps and described below, for simplicity's sake, with reference only to the saliency map S(x,y), i.e. the one with the lowest level of the pyramid representation.

In general, the normalized saliency map $S^N(x,y)$ is calculated by subtracting the median value of the saliency map S(x,y), denoted below by *m*, from each pixel of the saliency map S(x,y) and by dividing the result of the subtraction by the standard deviation of the saliency map S(x,y), denoted below by s. In formulas we have:

$$m = median\{S(x,y)\}$$

$$S^N(x,y) = \frac{S(x,y) - m}{s}$$

The standard deviation *s* of the saliency map S(x,y) is calculated as a function of the absolute median deviation around the median value of the saliency map S(x,y), denoted below with MAD:

$$s = 1.4826 \cdot MAD\{S(x,y)\},$$

wherein the absolute median deviation MAD is given by:

$$MAD\{S(x,y)\} = mean|S(x,y) - m|.$$

The step of merging the normalized saliency map $S^N(x,y)$ with the normalized and resized saliency maps $S_i^\uparrow(x,y)$ envisages, for each pair of spatial coordinates (x,y) in the plane of the saliency maps, obtaining a corresponding pixel of the final saliency map $S_F(x,y)$ by selecting the maximum pixel value between the saliency maps $S^N(x,y)$ and $S_i^\uparrow(x,y)$, i.e. in formula:

$$S_F(x,y) = max\{S^N(x,y), S_i^\uparrow(x,y)\}.$$

The detection system 4 described above can adapt to any surveillance system, and in particular to the digital images provided by any optoelectronic device, although it has proved to be particularly effective using as original images the video frames of the luminance component of a video signal encoded using the YUV standard. In particular, the detection system 4 proves to be extremely effective in monitoring panoramic images.

The main advantage of the detection system 4 described above derives from the combination of using the saliency map of the original image with the pyramid representation of the saliency map. In fact, a saliency map allows very small potential objects of interest to be detected in the original image, whereas larger potential objects of interest would be detected as a cluster of smaller objects, thus losing some of the information on the larger object. With a pyramid representation of the saliency map, each higher level saliency map $S_i(x,y)$ contains accurate information on objects of interest that are small in relation to the resolution of that map, but which are larger objects of interest on the saliency map $S(x,y)$ relative to the original image $f(x,y)$. Thus, merging the saliency maps into a final saliency map $S_F(x,y)$ allows information to be retrieved about the larger objects of interest that come from the higher-level saliency maps $S_i(x,y)$ in the pyramid.

Another advantage of the detection system 4 is the operating speed, thanks to the implementation in a heterogeneous environment in which the programmable logic device 5 performs in parallel the most onerous processing that involves creating the pyramid representation of the original image $f(x,y)$ and extracting the saliency maps for each level of the pyramid representation.

Finally, the detection system 4 makes no assumptions about the characteristics of the potential objects of interest and is therefore also able to detect stationary objects.

In conclusion, the detection system 4 allows to automate the entire surveillance process of an area in order to identify targets or threats and therefore allows to drastically reduce the effort of an operator in charge of monitoring that area.

## Claims

1. A detection system to facilitate detection of a potential object of interest in an original image (I; f), the detection system (4) comprising a programmable logic device (5) and a processor (6) interfaced with the programmable logic device (5) and a memory (8); the programmable logic device (5) being programmed to implement a cascade of image processing stages (10), each comprising a respective low-pass filter (11) and a respective subsampling module (12) connected to the output of the low-pass filter (11), the low-pass filter (11) of a first image processing stage (10) receiving the original image (I; f) and the subsampling modules (12) providing respective processed images ($f_i$); the programmable logic device (5) being programmed to implement a number of saliency map extraction modules (13) equal to the number of image processing stages (10) plus one to provide respective saliency maps ($S, S_i$), each of which is relative to a respective image of a group of images including the original image (I; f) and the processed images ($f_i$); the memory (8) storing a software, which, when executed on the processor (6), causes the latter to be configured to normalize (14) the saliency maps ($S, S_i$) according to their respective standard deviations, resize (15) the normalized saliency maps ($S^N, S_i^N$) relative to the processed images ($f_i$) so as to bring them to the size of the saliency map (S) of the original image (I; f), and merge (16) a group of saliency maps including the normalized and resized saliency maps ($S_i^{\uparrow}$) of the processed images ($f_i$) and the normalized saliency map ($S^N$) of the original image (I; f) in order to obtain a final saliency map ($S_F$) on which the potential object of interest can be detected; said original image (I; f) being the luminance component of a video image encoded using the YUV standard.

2. The detection system according to claim 1, wherein each of the saliency maps ($S, S_i$) is obtained based on a calculation of the spectral residual (R) of a respective image of the group of images (I, $f_i$; f, $f_i$).

3. The detection system according to claim 1, wherein each of the saliency map extraction modules (13) comprises a first calculation module (17), which is configured to receive a respective image of the group of images (I, $f_i$; f, $f_i$) and applies to said image a two-dimensional fast Fourier transform to provide modulus (A) and phase ($\theta$) of the spectrum of the image, a second calculation module (18), which is configured to receive the modulus (A) of the spectrum and provide the respective spectral residual (R), a third calculation module (19), which is configured to combine the spectral residual (R) with the phase ($\theta$) of the spectrum, a fourth calculation module (20), which is configured to apply a two-dimensional inverse fast Fourier transform to the combination of spectral residual (R) and phase ($\theta$) of the spectrum and thus obtain a raw saliency map ($S_R$), and a fifth calculation module (21), which is configured to apply a two-dimensional Gaussian filter to the squared modulus of the raw saliency map ($S_R$) and thus obtain the saliency map ($S, S_i$) relative to said image of the group of images.

4. The detection system according to claim 3, wherein said second calculation module (18) is configured to calculate the logarithm of the modulus (A) of the spectrum, filter the logarithm of the modulus (A) of the spectrum by a moving average and obtain said spectral residual (R) by subtracting the result of the moving average from the modulus (A) of the spectrum.

5. The detection system according to claim 4, wherein said moving average is obtained by calculating a two-dimensional convolution between the logarithm of the modulus (A) of the spectrum and a two-dimensional rectangular windowing function (W).

6. The detection system according to any one of claims 1 to 5, wherein the merging (16) of the group of saliency maps ($S^N$, $S_i^\uparrow$) comprises, for each pair of spatial coordinates in the plane of the saliency maps ($S^N$, $S_i^\uparrow$) of said group, the step of obtaining a corresponding pixel of the final saliency map ($S_F$) by selecting the maximum pixel value between the saliency maps ($S^N$, $S_i^\uparrow$) of the group.

7. The detection system according to any one of claims 1 to 6, wherein the normalization (14) of the saliency maps (S, $S_i$) comprises, for each saliency map (S, $S_i$), the steps of calculating the median value, m, of the saliency map, calculating the standard deviation, s, of the saliency map and calculating a normalised saliency map ($S^N$, $S_i^N$) by subtracting the median value, m, from each pixel of the saliency map ($S^N$, $S_i^N$) and by dividing the result of the subtraction by the standard deviation, s.

8. The detection system according to claim 7, wherein the normalization (14) of the saliency maps (S, $S_i$) comprises, for each saliency map (S, $S_i$), the step of calculating an median absolute deviation around the median value, MAD, of the saliency map (S, $S_i$); the standard deviation (s) being calculated by multiplying the median absolute deviation around the median value, MAD, by a constant equal to 1.4826.

9. The detection system according to any one of claims 1 to 8, wherein said programmable logic device (5) is programmed to implement an image conditioning module (9) connected upstream of the low-pass filter (11) of the first image processing stage (10) to perform a padding of the original image (I) in order to neutralize errors near the edge of that image due to discontinuity of the image.

10. A surveillance system comprising an optoelectronic device (2) for acquiring an image of an area to be monitored, a display device (3) for displaying images and a detection system (4) according to any one of claims 1 to 9 and connected to the optoelectronic device (2) in such a way that the acquired image coincides with said original image (I; f) and to the display device (5) for displaying said final saliency map (SF).

**Patentansprüche**

1. Erfassungssystem zum Erleichtern des Erfassens eines potentiellen Objekts von Interesse in einem Originalbild (I; f), wobei das Erfassungssystem (4) eine programmierbare Logikvorrichtung (5) und einen Prozessor (6) aufweist, der mit der programmierbaren Logikvorrichtung (5) und einem Speicher (8) verbunden ist, wobei die programmierbare Logikvorrichtung (5) dafür programmiert ist, eine Kaskade von Bildverarbeitungsstufen (10) zu implementieren, die jeweils ein entsprechendes Tiefpassfilter (11) und ein entsprechendes Unterabtastungsmodul (12) aufweisen, das mit dem Ausgang des Tiefpassfilters (11) verbunden ist, wobei das Tiefpassfilter (11) einer ersten Bildverarbeitungsstufe (10) das Originalbild (I; f) empfängt und die Unterabtastungsmodule (12) entsprechende verarbeitete Bilder ($f_i$) bereitstellen, wobei die programmierbare Logikvorrichtung (5) dafür programmiert ist, eine Anzahl von Salienzkarten-Extraktionsmodulen (13) zu implementieren, die gleich der Anzahl von Bildverarbeitungsstufen (10) plus eins ist, um jeweilige Salienzkarten (S, $S_i$) bereitzustellen, von denen sich jede auf ein jeweiliges Bild einer Gruppe von Bildern bezieht, die das Originalbild (I; f) und die verarbeiteten Bilder ($f_i$) aufweist, wobei der Speicher (8) eine Software speichert, die, wenn sie auf dem Prozessor (6) ausgeführt wird, diesen veranlasst, derart konfiguriert zu werden, dass er die Salienzkarten (S, $S_i$) gemäß ihren jeweiligen Standardabweichungen normalisiert (14), die normalisierten Salienzkarten ($S^N$, $S_i^N$) relativ zu den verarbeiteten Bildern ($f_i$) in der Größe ändert (15), um sie auf die Größe der Salienzkarte (S) des Originalbildes (I; f) zu bringen, und eine Gruppe von Salienzkarten, die die normalisierten und in der Größe geänderten Salienzkarten ($S_i^\uparrow$) der verarbeiteten Bilder ($f_i$) und der normalisierten Salienzkarte ($S^N$) des Originalbildes (I; f) vereinigt, um eine endgültige Salienzkarte ($S_F$) zu erhalten, auf der das potentielle Objekt von Interesse erfasst werden kann, wobei das Originalbild (I; f) die Luminanzkomponente eines Videobildes ist, das unter Verwendung des YUV-Standards codiert ist.

2. Erfassungssystem nach Anspruch 1, wobei jede der Salienzkarten (S, $S_i$) auf der Grundlage einer Berechnung des spektralen Residuums (R) eines jeweiligen Bildes der Gruppe von Bildern (I, $f_i$; f, $f_i$) erhalten wird.

3. Erfassungssystem nach Anspruch 1, wobei jedes der Salienzkarten-Extraktionsmodule (13) aufweist: ein erstes Rechenmodul (17), das dafür konfiguriert ist, ein jeweiliges Bild der Gruppe von Bildern (I, $f_i$; f, $f_i$) zu empfangen und auf das Bild eine zweidimensionale Fast-Fourier-Transformation anzuwenden, um Betrag (A) und Phase ($\theta$)

des Spektrums des Bildes bereitzustellen, ein zweites Rechenmodul (18), das dafür konfiguriert ist, den Betrag (A) des Spektrums zu empfangen und das jeweilige spektrale Residuum (R) bereitzustellen, ein drittes Rechenmodul (19), das dafür konfiguriert ist, das spektrale Residuum (R) mit der Phase ($\theta$) des Spektrums zu kombinieren, ein viertes Rechenmodul (20), das dafür konfiguriert ist, eine zweidimensionale inverse Fast-Fourier-Transformation auf die Kombination des spektralen Residuums (R) und der Phase ($\theta$) des Spektrums anzuwenden und auf diese Weise eine rohe Salienzkarte ($S_R$) zu erhalten, und ein fünftes Rechenmodul (21), das dafür konfiguriert ist, ein zweidimensionales Gaußfilter auf den quadrierten Betrag der rohen Salienzkarte ($S_R$) anzuwenden und auf diese Weise die Salienzkarte (S, $S_i$) in Bezug auf das Bild der Gruppe von Bildern zu erhalten.

4. Erfassungssystem nach Anspruch 3, wobei das zweite Rechenmodul (18) dafür konfiguriert ist, den Logarithmus des Betrags (A) des Spektrums zu berechnen, den Logarithmus des Betrags (A) des Spektrums durch einen gleitenden Mittelwert zu filtern und das spektrale Residuum (R) durch Subtrahieren des Ergebnisses des gleitenden Mittelwertes vom Betrag (A) des Spektrums zu erhalten.

5. Erfassungssystem nach Anspruch 4, wobei der gleitende Mittelwert durch Berechnen einer zweidimensionalen Faltung zwischen dem Logarithmus des Betrag (A) des Spektrums und einer zweidimensionalen rechteckigen Fensterfunktion (W) erhalten wird.

6. Erfassungssystem nach einem der Ansprüche 1 bis 5, wobei das Vereinigen (16) der Gruppe von Salienzkarten ($S^N$, $S_i^\uparrow$) für jedes Paar von Raumkoordinaten in der Ebene der Salienzkarten ($S^N$, $S_i^\uparrow$) der Gruppe den Schritt zum Erhalten eines entsprechenden Pixels der endgültigen Salienzkarte ($S_F$) durch Auswählen des maximalen Pixelwertes zwischen den Salienzkarten ($S^N$, $S_i^\uparrow$) der Gruppe aufweist.

7. Erfassungssystem nach einem der Ansprüche 1 bis 6, wobei das Normalisieren (14) der Salienzkarten (S, $S_i$) für jede Salienzkarte (S, $S_i$) die Schritte zum Berechnen des Medianwertes, m, der Salienzkarte, Berechnen der Standardabweichung, s, der Salienzkarte und Berechnen einer normalisierten Salienzkarte ($S^N$, $S_i^N$) durch Subtrahieren des Medianwertes, m, von jedem Pixel der Salienzkarte ($S^N$, $S_i^N$) und Dividieren des Ergebnisses der Subtraktion durch die Standardabweichung, s, aufweist.

8. Erfassungssystem nach Anspruch 7, wobei das Normalisieren (14) der Salienzkarten (S, $S_i$) für jede Salienzkarte (S, $S_i$) den Schritt zum Berechnen einer absoluten Medianabweichung um den Medianwert, MAD, der Salienzkarte (S, $S_i$) aufweist, und wobei die Standardabweichung (s) durch Multiplizieren der absoluten Medianabweichung um den Medianwert, MAD, mit einer Konstante von 1,4826 berechnet wird.

9. Erfassungssystem nach einem der Ansprüche 1 bis 8, wobei die programmierbare Logikvorrichtung (5) dafür programmiert ist, ein Bildaufbereitungsmodul (9) zu implementieren, das dem Tiefpassfilter (11) der ersten Bildverarbeitungsstufe (10) vorgeschaltet ist, um ein Padding bezüglich des Originalbildes (I) auszuführen, um Fehler in der Nähe des Randes dieses Bildes aufgrund einer Diskontinuität des Bildes zu neutralisieren.

10. Überwachungssystem mit einer optoelektronischen Vorrichtung (2) zum Erfassen eines Bildes eines zu überwachenden Bereichs, einer Anzeigevorrichtung (3) zum Anzeigen von Bildern und einem Erfassungssystem (4) nach einem der Ansprüche 1 bis 9, das mit der optoelektronischen Vorrichtung (2) derart verbunden ist, dass das erfasste Bild mit dem Originalbild (I; f) übereinstimmt, und mit der Anzeigevorrichtung (5) zum Anzeigen der endgültigen Salienzkarte verbunden ist.

## Revendications

1. Système de détection pour faciliter la détection d'un objet d'intérêt potentiel dans une image d'origine (I; f), le système de détection (4) comprenant un dispositif logique programmable (5) et un processeur (6) interfacé avec le dispositif logique programmable (5) et une mémoire (8); le dispositif logique programmable (5) étant programmé pour mettre en oeuvre une cascade d'étages de traitement d'image (10), comprenant chacun un filtre passe-bas (11) respectif et un module de sous-échantillonnage (12) respectif connecté à la sortie du filtre passe-bas (11), le filtre passe-bas (11) d'un premier étage de traitement d'image (10) recevant l'image d'origine (I; f) et les modules de sous-échantillonnage (12) fournissant des images traitées respectives ($f_i$); le dispositif logique programmable (5) étant programmé pour mettre en oeuvre un certain nombre de modules d'extraction de cartes de saillance (13) égal au nombre d'étages de traitement d'image (10) plus un pour fournir des cartes de saillance respectives (S, Si), dont chacune est relative à une image respective d'un groupe d'images incluant l'image d'origine (I; f) et les images traitées ($f_i$);

la mémoire (8) stockant un logiciel qui, lorsqu'il est exécuté sur le processeur (6), amène ce dernier à être configuré pour normaliser (14) les cartes de saillance (S, S$_i$) selon leurs écarts types respectifs, redimensionner (15) les cartes de saillance normalisées (S$^N$, S$_i^N$) par rapport aux images traitées (f$_i$) de manière à les amener à la taille de la carte de saillance (S) de l'image d'origine (I; f), et fusionner (16) un groupe de cartes de saillance incluant les cartes de saillance normalisées et redimensionnées (S$_i^\uparrow$) des images traitées (f$_i$) et la carte de saillance normalisée (S$^N$) de l'image d'origine (I; f) afin d'obtenir une carte de saillance finale (S$_F$) sur laquelle l'objet d'intérêt potentiel peut être détecté; ladite image d'origine (I; f) étant la composante de luminance d'une image vidéo codée au moyen de la norme YUV.

2. Système de détection selon la revendication 1, dans lequel chacune des cartes de saillance (S, S$_i$) est obtenue sur la base d'un calcul du résidu spectral (R) d'une image respective du groupe d'images (I, f$_i$; f, f$_i$).

3. Système de détection selon la revendication 1, dans lequel chacun des modules d'extraction de cartes de saillance (13) comprend un premier module de calcul (17), qui est configuré pour recevoir une image respective du groupe d'images (I, f$_i$; f, f$_i$) et applique à ladite image une transformée de Fourier rapide bidimensionnelle pour fournir le module (A) et la phase ($\theta$) du spectre de l'image, un deuxième module de calcul (18), qui est configuré pour recevoir le module (A) du spectre et fournir le résidu spectral respectif (R), un troisième module de calcul (19), qui est configuré pour combiner le résidu spectral (R) avec la phase ($\theta$) du spectre, un quatrième module de calcul (20), qui est configuré pour appliquer une transformée de Fourier rapide inverse bidimensionnelle à la combinaison du résidu spectral (R) et de la phase ($\theta$) du spectre et ainsi obtenir une carte de saillance brute (S$_R$), et un cinquième module de calcul (21), qui est configuré pour appliquer un filtre gaussien bidimensionnel au module au carré de la carte de saillance brute (S$_R$) et ainsi obtenir la carte de saillance (S, S$_i$) relative à ladite image du groupe d'images.

4. Système de détection selon la revendication 3, dans lequel ledit deuxième module de calcul (18) est configuré pour calculer le logarithme du module (A) du spectre, filtrer le logarithme du module (A) du spectre par une moyenne mobile et obtenir ledit résidu spectral (R) en soustrayant le résultat de la moyenne mobile du module (A) du spectre.

5. Système de détection selon la revendication 4, dans lequel ladite moyenne mobile est obtenue en calculant une convolution bidimensionnelle entre le logarithme du module (A) du spectre et une fonction de fenêtrage rectangulaire bidimensionnelle (W).

6. Système de détection selon l'une quelconque des revendications 1 à 5, dans lequel la fusion (16) du groupe de cartes de saillance (S$^N$, S$_i^\uparrow$) comprend, pour chaque paire de coordonnées spatiales dans le plan des cartes de saillance (S$^N$, S$_i^\uparrow$) dudit groupe, l'étape d'obtention d'un pixel correspondant de la carte de saillance finale (S$_F$) en sélectionnant la valeur de pixel maximale entre les cartes de saillance (S$^N$, S$_i^\uparrow$) du groupe.

7. Système de détection selon l'une quelconque des revendications 1 à 6, dans lequel la normalisation (14) des cartes de saillance (S, S$_i$) comprend, pour chaque carte de saillance (S, Si), les étapes de calcul de la valeur médiane, m, de la carte de saillance, de calcul de l'écart type de la carte de saillance et de calcul d'une carte de saillance normalisée (S$^N$, S$_i^N$) en soustrayant la valeur médiane, m, de chaque pixel de la carte de saillance (S$^N$, S$_i^N$) et en divisant le résultat de la soustraction par l'écart type, s.

8. Système de détection selon la revendication 7, dans lequel la normalisation (14) des cartes de saillance (S, S$_i$) comprend, pour chaque carte de saillance (S, Si), l'étape de calcul d'un écart absolu médian autour de la valeur médiane, MAD, de la carte de saillance (S, Si); l'écart type (s) étant calculé en multipliant l'écart absolu médian autour de la valeur médiane, MAD, par une constante égale à 1,4826.

9. Système de détection selon l'une quelconque des revendications 1 à 8, dans lequel ledit dispositif logique programmable (5) est programmé pour mettre en oeuvre un module de conditionnement d'image (9) connecté en amont du filtre passe-bas (11) du premier étage de traitement d'image (10) pour effectuer un remplissage de l'image d'origine (I) afin de neutraliser les erreurs près du bord de cette image dues à la discontinuité de l'image.

10. Système de surveillance comprenant un dispositif optoélectronique (2) pour acquérir une image d'une zone à surveiller, un dispositif d'affichage (3) pour afficher des images et un système de détection (4) selon l'une quelconque des revendications 1 à 9 et connecté au dispositif optoélectronique (2) de telle manière que l'image acquise coïncide avec ladite image d'origine (I; f) et au dispositif d'affichage (5) pour afficher ladite carte de saillance finale (S$_F$).

FIG.1

FIG.2

FIG.3

FIG.4

FIG.5

**REFERENCES CITED IN THE DESCRIPTION**

**Non-patent literature cited in the description**

- A novel approach to multi-scale blending based on saliency mapping for multimedia image composition applications. **ACHAL PANDEY.** Computers and Graphics. Elsevier, 23 June 2016, vol. 59, 93-106